# EUROPEAN PATENT APPLICATION

(11) **EP 1 657 656 A2**
(43) Date of publication of application: **17.05.2006**
(21) Application number: 05257039.7
(22) Date of filing: 15.11.2005
(51) Int. Cl.: G06F 17/30

(54) **System and methods for provisioning geospatial data**

(30) Priority: 16.11.2004 US 990205
(71) Applicant: Solunet Storage, Inc. d/b/a Sanz Federal, Englewood, CO 80112 (US)
(72) Inventor: Hardy, Mark David, Castle Rock, CO 80109 (US)
(74) Representative: Palmer, Jonathan R.

(57) **Abstract**

An interactive geospatial data provisioning application presents a graphical user interface operable to present a map of geographic regions and corresponding geospatial data sets available. The user selects the area of interest by panning and zooming over the mapped regions corresponding to the available geospatial data sets. The application identifies geospatial data sets within the area of interest. By analyzing the attributes available in the identified geospatial data sets, the geospatial data application determines the operations applicable to the data sets. A set of transformation rules computes the operations available for a particular selection of geospatial data sets. The application presents the available operations, and the user select the geospatial data operations to apply from among the available operations. The geospatial data application applies the selected operations to the identified geospatial data sets to generate the resulting output geospatial data set, or product, for rendering on a user output display.

## Description

### BACKGROUND OF THE INVENTION

In a typical business enterprise, the notion of data, or the collective intellectual property of employee knowledge, constitutes one of the key assets of any organization. As a key asset, data must be properly leveraged and managed according to its usage and impact to the organization. Not all data is created equally, and every organization values specific types of data more than others. Many organizations characterize their data based on its importance, which translates to the amount of money and resources spent in acquisition, management, and maintenance. Once an organization has determined the relevance of certain data assets, the organization can develop adequate policies to deliver the corresponding level of support. One type of data asset of particular significance in terms of acquisition and management cost is geospatial data. Geospatial data represents various aspects of a particular geographic area, such as topography, vegetation, moisture, or virtually any detectable quality of a particular area or region. With conventional geospatial data, the issues surrounding management can become particularly complex and expensive acute due to the size of the data and the computationally intensive operations typically associated with the geospatial data.

Conventional corporations, or enterprises, typically require significant capital to acquire and maintain their assets. These business benefits must outweigh these asset costs in order to justify the expense. In essence, all data created or purchased by an organization must promise a return on investment for the duration of that asset's existence. In many organizations, asset costs are confined only to the acquisition costs. Total asset cost can be more accurately determined by identifying all of the cost components over the entire life of the asset. Regardless of how an organization values its geospatial data, optimizing the value associated with the asset will provide a higher return to the organization.

With respect to conventional geospatial data assets, such issues typically include acquisition, processing, and management of the conventional geospatial data to mitigate duplication and redundancy of data logistics, computation, and delivery of the resulting data product to a data consumer organization (internal or external). Geospatial data is often sold or licensed by commercial organizations or public agencies, to offset the substantial costs associated with acquiring and preparing generating geospatial data for general usage. Since purchasing, or acquisition of conventional geospatial data can be costly, it is typically justified based on a specific mission or project. The conventional acquisition process occurs through internal methods or through commercial remote sensing or vector data providers. Costs may be optimized through contracting methods, however in many cases, the purchasing stakeholders do not identify other stakeholders within the organization before purchasing data. Sharing costs among multiple stakeholders leads to reducing the overall data acquisition costs per project and reduce redundancy. In many cases, geospatial assets could be effectively leveraged throughout an organization at all levels of the business but due to traditional management and dissemination challenges, the potential effectiveness of the information cannot be realized.

Geospatial data typically encounters substantial mathematically intensive processing in order to generate a desired and usable data product. The organization stakeholders in who purchase the data often determine how the data will be processed for delivery. These special processing tasks lead to additional, costs as the data is often output into formats specific only to the project specified by one group of stakeholders. Although contracting the processing in most cases is more cost-effective than doing the work in-house, there may be cases where processing the data renders the result unusable by other organizations, thus reducing the ability to share costs and elevate the data to an enterprise use level.

Further, conventional data management for these large volumes of data can be very costly and can be prohibitive for some organizations. Specifically with large imagery archives, building highly available and redundant archive systems add to the complexity and costs of effectively managing these assets. Although the acquisition and processing costs for an asset may only occur once, management costs are recurring and increase over time. The three key cost considerations for data management of geospatial data include storage, protection, and distribution of the geospatial data assets.

The actual geospatial data assets typically codify a variety of geographic features, properties, and other attributes pertaining to a particular region or area, which are enumerated, normalized, and stored as so-called raw geospatial data sets. These raw geospatial assets require a certain amount of specified post processing based on the requirements of each end user application. Geospatial data, therefore, includes various forms of information gathered about particular characteristics of a geographic area, typically gathered by scanning a geographic region partitioned according to a grid overlay. Geospatial image data is often used to generate a map of a geographical area to denote various features of interest. Such geospatial image data is gathered by a variety of techniques, such as via satellites and aircraft, and encompasses data gathered by a variety of sensor mediums, such as optical, radar, infrared, laser, manual survey, and other suitable methods. Often, as indicated above, the geospatial image data is processed through computationally intensive mathematical synthesizing operations to obtain a particular output set. The synthesizing operations typically require significant manual efforts, and require substantial time and computational resources to compute. These operations create derivative datasets which are close to the original but differ due to errors called resampling. As the derivative datasets become more removed from the raw dataset, the errors are amplified and the resulting datasets become further in truth from the original measured information. This is the main reason that many geospatial data users prefer to work directly with the raw imagery rather than derivative datasets.

Conventional raw geospatial data has been and continues to be gathered by a variety of governmental and private entities. The National Geospatial-Intelligence Agency (NGA), The National Reconnaissance Office (NRO), and the Federal Geographic Data Committee (FGDC) are among the various entities that catalog raw as well as processed geospatial data. Processed geospatial data is typically used in Geographic Information Systems (GIS) according to protocols such as the National Spatial Data Infrastructure (NSDI), promulgated by organizations such as the FGDC, and embodied in the National Geospatial Data Clearinghouse, a public domain collection of geospatial data organized to promote cooperative production and sharing of geospatial data among federal, state, academic, corporate, and private entities having an interest in geospatial data. While initially developed to support intelligence operations for military purposes, geospatial data is often employed for a variety of research and consumer purposes, including oil and gas mining, agricultural conditions, real estate development and surveying, outdoor expeditions such as camping, hunting and fishing, and even recreational endeavors such as golf and flight simulation. For each of these specific "vertical" applications, raw geospatial imagery must be processed to create a derivative dataset specific to the needs of those individual applications.

### SUMMARY

Geospatial data typically involves very large data sets which are cumbersome, complex and computationally intensive to process. Traditionally, geospatial output, typically data sets or images produced from raw geospatial data, have been produced through time intensive manual computations by highly skilled operators. These conventional computations typically involve gathering the raw geospatial data from geospatial data sets concerning a geographic area of interest, and synthesizing the raw data with other geospatial data sets to generate the desired output image, or product. Geospatial operations for synthesizing the geospatial data sets involve mathematical convolutions and image processing techniques such as resampling, polynomial warping, filtering, projecting, masking, and other operations as are known to those skilled in imagery science, otherwise known as remote sensing. Further, because the geospatial data assets represent value to the stakeholders (users) who initially finance, manage and process such data, the geospatial data is generally distributed across multiple organizations, in stovepipe imagery archives or data sources, some of which are discussed above.

Accordingly, a typical conventional geospatial data request takes the form of a user query indicative of a particular area and type of output image or map. Such conventional requests typically employs a GIS or remote sensing specialist familiar with the relevant data sets and trained in the applicable image processing operations. Such a request may be, for example, an operation combining three dimensional elevation data with ground permeability to identify likely flood areas due to be used by a real estate developer or insurance company. Another example might illustrate a shift over time (temporal), such as an operation which detects the changes in vegetation over time for a specific area which could be used to illustrate the effect of a polluted river. However, the conventional end user requesting the data does not possess the expertise to create these datasets themselves and therefore relies on the skills of a third party. The end user therefore experiences an often lengthy lag time in fulfilling the data request, conveying the request to the GIS specialist, and waiting for the GIS specialist to process it from the raw imagery. Further, a discrepancy or misunderstanding may result in an erroneous or inaccurate result, compounding the lag time due to repeated and/or refined efforts. Accordingly, users may anticipatorily request geospatial data output on the mere potential to need such output at a future time. Such preemptory requests tend to increase the overall workload, increase response time for all requests, and result in output geospatial data sets which are likely to be "mothballed," or passively stored, until obsolete or not relevant to the matter for which they were procured.

For an organization to optimize geospatial data asset costs, decision makers must adopt more efficient and consistent processes and enforce them with specific tools and technologies. One of the processes that allow organizations to optimize their costs is geospatial data asset provisioning. The term provisioning is used more traditionally for the acquisition of hard goods such as computers, vehicles and gasoline. Similarly, Geospatial Data Provisioning processes combine the management of assets with efficient distribution and preparedness with the success of the process defined by how effective the asset was utilized by the enterprise. Applied to geospatial assets, provisioning can be defined as the ability to provide custom geospatial data from an accessible archive of raw source imagery in a format specific to each individual end user. Extended further, spatial data provisioning provides custom datasets to a wide variety of end users based on the particular requirements of the specific mission or objective.

Therefore, because of the costs involved with processing and managing geospatial data, the raw data sets and resulting synthesized output sets are viewed as an important asset by the organizations maintaining and providing such geospatial output to the consumers of the data. Accordingly, geospatial data sets are the subject of license, maintenance, and ownership agreements of substantial value. By some accounts, as much as 2% of all Federal spending is directed toward acquisition, storage, and processing of geospatial data. Accordingly, it would be beneficial to provide a system and method for provisioning geospatial data to facilitate delivery of the output geospatial data set as a product to the end user as one method of increasing the utilization of the assets, reducing duplicity and reducing overall asset management costs.

The concept of provisioning data suggests that an organization first have a stock of spatial data prepared before a need arises. Once the need occurs, an efficient provisioning process rapidly extracts and aggregates the source data into a format specific to the end user. To support this process, the source data is typically pre-staged and catalogued for easy search, retrieval, and provisioning - this is referred to as the ingest process. From a data storage perspective, the ability to access these large datasets in real time or near real time requires a method for developing a virtual catalog of imagery regardless of where it physically resides within the organization. A process for aggregating individual datasets from various locations on multiple media formats is a desirable component of an enterprise data-cataloging system according to particular configurations discussed herein.

The spatial data provisioning process consists of several integrated components. A data catalog records the attributes of specific data sources and stores this information in a relational database system indexed based on the geographical location of each asset. The catalog provides search and retrieval capabilities based on spatial, temporal and the various data attributes. The geospatial data is typically stored in its original source format - both in file format and spatial context, and is then provisioned specific to the needs of each end user. In this sense, provisioning includes certain image manipulations to reprocess, reproject, resample, reformat and combine various datasets in rapid fashion. Centralized business logic rules, or transformation rules, apply to the creation of specific derivative data sets to automate repetitive and complex image creation requests. These business rules are linked to specific types of data or combinations of data and are accessed based on the policies of each organization. The application of these business rules to the geospatial assets reduce errors, assure consistency, reduce the required end user skill level and generally allow end users to easily integrate these assets into traditional decision support operations. In this manner, spatial data provisioning as discussed herein represents the next generation of managing and disseminating spatial data.

Accordingly, configurations of the invention are based, in part, on the observation that generating a conventional output geospatial data set involves substantial interaction and effort on behalf of the GIS/remote sensing specialist, resulting in a lag time to provide the output data set which can trigger anticipatory and possibly redundant and/or unnecessary generation of output data sets. Conventional users may tend to initiate generation of an output data set based on a potential, rather than actual, need so that the output data set will be available at a future time, rather than attempting to find an existing output data set which suits the need at hand, or simply waiting for an actual need, due to the subsequent lag time involved.

Therefore, configurations of the invention substantially overcome the shortcomings of conventional geospatial output data set generation by provisioning geospatial data in such a manner that users may search for existing available geospatial data sets concerning an area of interest, define available geospatial operations for the geospatial data sets by selecting applicable operations in a point-and-click manner, and generate the resulting geospatial output data sets by applying the selected geospatial operations to the data sets. The invention represents a rules driven expert system specific to the management and dissemination of geospatial imagery.

An interactive geospatial data provisioning application, according to configurations discussed herein, presents a graphical user interface operable to present a map of geographic regions and the corresponding geospatial data sets available within that region. The available data sets are restricted within the map based on the access granted to each end user. End user may have one of three categories of data access; full control which allows the end user to create full resolution derivative products; view access which only grants access to the attributes or no access in which the end user does not have access to any information regarding the data asset. The user selects their specific area of interest by creating a polygon within the map using free form or precise definition of the vertices and can navigate the map by panning and zooming over the mapped regions which outline and identify portions covered by the available geospatial data sets. The application identifies the corresponding geospatial data sets within the defined area of interest. By analyzing the attributes available in the identified geospatial data sets, the provisioning application determines which geospatial data operations may be performed on the selected list of data sets. These operations are further restricted based on the privileges accorded each individual end user. A set of transformation rules enumerates the attributes and conditions which correspond to a particular operation, and therefore computes the operations available for a particular selection of geospatial data sets and available to the specific end user. The application presents the available operations, and the user selects the specific geospatial data operation to apply from among the available operations. The geospatial data provisioning application applies the selected operations to the identified geospatial data sets to generate the resulting output geospatial data set. The output geospatial data set is rendered by the application, creating a derivative dataset on a computer storage device in the required file format or graphical display mechanism.

In particular configurations, the geospatial data provisioning application employs the transformation rules to define appropriate relations between users, geospatial data sets, or sources, and operations on the data. A catalog, such as a local application repository, is generated and maintained to store information about the available data sets, including available attributes therein, the geographic area to which the data set pertains, and low resolution graphical information to enable a thumbnail image of the area. The catalog allows the user to identify available operations, based on the privileges defined in the transformation rules, and obtain a preview of the resulting transformed data set prior to retrieving the entire raw geospatial data set from a remote source. Once selected, the user receives the output data product resulting from the user specific selection of data sets and operations. Further, the provisioning framework provided by the transformation rules allows new data sets, attributes, and operations to be integrated merely by updating the rules to recognize the new data sets, attributes, and applicable operations, thus providing a seamless integration of new geospatial data gathering and sensing capabilities.

Exemplary configurations of the invention discussed herein employ high level entity relationships between primary components within the usage of geospatial data by configurations of the invention and describes the intersecting business rule logic therein. The configurations of the invention rely on these three virtual objects and their relationships within an overall process. These objects include a user or person who will create the desired data, geospatial assets which include the acquired data and operations or algorithms which can be used to produce data products.

In further detail, the method of provisioning data from application of geospatial operations on geospatial data according to configurations of the invention include identifying a plurality of geospatial data sets corresponding to an area of interest, in which each of the geospatial data sets has metadata and attribute values defining attributes of the area of interest, and determining, from predefined business rules rules, operations applicable to the identified geospatial data sets based on the relationships defined which correlate the attributes of the geospatial data sets and the parameters corresponding to the operations. Responsive to interactive user input, the geospatial data application applies at least one of the determined operations to the identified geospatial data sets according to the transformation rules to generate an output data set, and provides, to the requesting (querying) user, a provisioned data set, typically an output image or images, corresponding to the area of interest from the generated output data set.

Applying the geospatial operations involves defining parameters of each of the determined operations, in which the parameters are supplied from attribute values in the geospatial data sets. Identifying the plurality of geospatial data sets includes displaying an array of available geospatial data sets which correspond to the geographic regions defined by receiving a user selection indicative of an area of interest or geographic location on the earth using latitude and longitude.. The geospatial data application searches for geospatial data sets attributable to the selected geographic regions. The application determines applicable operations by identifying, from the metadata corresponding to the data sets, attributes available in each of the data sets, and processes the transformation rules to compute operations applicable to each of the selected data sets, in which processing further includes conditionally matching attributes of the data sets to the parameters of the operations.

In particular configurations, identifying the plurality of geospatial data sets further involves gathering metadata from each of the available geospatial data sets, identifying available attribute values in the geospatial data sets from the metadata, and cataloging the geospatial data sets for subsequent retrieval according to the available attributes and geographic region covered. Gathering, or retrieving geospatial data sets may further include identifying a portion of the geospatial data set corresponding to the area of interest, and retrieving only the attribute data corresponding to the area of interest, mitigating network traffic associated with transporting entire raw geospatial data sets when only a portion thereof is requested. Such geospatial data typically includes various forms and types of data, representing aspects such as terrain elevation, satellite and aerial images, detailed street maps and geometrical models of buildings and similar man-made structures (including present, past and future structures).

Configurations of the invention conditionally match the raw data sets and appropriate operations via the GUI. Conditionally matching the data sets further involves identifying geospatial data sets having attributes expected by a particular geospatial operation, in which the particular operation is operable on the attribute values of one or more of the geospatial data sets, for generating a transformed data set representing a synthesis of the attribute values for a particular geographic region.

In an exemplary arrangement, the transformation rules are business logic rules indicative of geospatial data attributes compatible with particular geospatial operations, in which the geospatial operations correspond to image processing operations. Applying the geospatial operations in conjunction with user selectable options via the GUI further includes displaying the determined applicable operations to a user, and receiving a user selection indicative of selected operations to perform on the geospatial data sets corresponding to the area of interest. Implementing the GUI further includes establishing, for each of the geospatial data sets, an access control list indicative of particular users and a level of access for each user.

The transformation rules are further operable to determine, for a particular user, the level of access for each geospatial data set applicable to the area of interest. The GUI therefore provides selective access by determining, for a particular user, the level of access for each geospatial data set applicable to the area of interest, and allowing a particular operation if the user has an appropriate level of access for each of the geospatial data sets expected for the particular operation. Similarly, the GUI disallows the particular operation for portions of the area of interest if the user does not have a sufficient level of access for the geospatial data sets expected by the particular operation.

The geospatial data provisioning application, in the exemplary configuration, further invokes the GUI for retrieving, for each of the geospatial data sets in the area of interest, metadata indicative of a low resolution rendition of the applicable geographic region. The application then displays an image of the area of interest from the retrieved low resolution rendition metadata, such as a thumbnail rendition of the area of interest.

In the exemplary configuration, the geospatial operations include, but are not limited to, transformations, resampling, tiling, rotating and cropping of the geospatial data and/or image represented thereby. Accordingly, due to the generally highly graphical components of the geospatial data, providing the provisioned data set further includes presenting, to a user, a graphical image corresponding to the area of interest and indicative of a correlation of the attribute values in the identified geospatial data sets.

Due to the processing intensive nature of the geospatial data, applying the selected operations according to principles of the invention may typically include identifying other users concurrently employing operations, and determining if potentially concurrent operations are operable for parallel computation. The geospatial data provisioning application then selectively serializes, if the requested operations are incompatible for parallel operations, the selected operations, and permits, if the operations are operable for parallel operation, concurrent operation processing, thereby optimizing available processing resources using multiprocessing and parallelism where appropriate.

The invention as disclosed above is described as implemented on a computer having a processor, memory, and interface operable for performing the steps and methods as disclosed herein. Other embodiments of the invention include a computerized device such as a computer system, central processing unit, microprocessor, controller, electronic circuit, application-specific integrated circuit, or other hardware device configured to process all of the method operations disclosed herein as embodiments of the invention. In such embodiments, the computerized device includes an interface (e.g., for receiving data or more segments of code of a program), a memory (e.g., any type of computer readable medium), a processor and an interconnection mechanism connecting the interface, the processor and the memory. In such embodiments, the memory system is encoded with an application having components that, when performed on the processor, produces a process or processes that causes the computerized device to perform any and/or all of the method embodiments, steps and operations explained herein as embodiments of the invention to allow execution of instructions in a computer program such as a Java, HTML, XML, C, or C++ application. In other words, a computer, processor or other electronic device that is programmed to operate embodiments of the invention as explained herein is itself considered an embodiment of the invention.

The invention also provides a method of provisioning geospatial data comprising:
searching for a plurality of raw data sets corresponding to a user query;
defining business logic rules corresponding to a user specified output data set, the business logic rules indicative of at least one operation and corresponding operation, the operation applicable to the attributes; and
generating the output data set responsive to the user query by applying the operations specified by the business logic rules to the applicable attributes in the plurality of data sets.

The invention also provides a method of providing geospatial data to a user comprising:
identifying a plurality of raw geospatial data sets, the raw geospatial data sets having metadata and attributes, identifying including retrieving metadata corresponding to each of the raw geospatial data sets;
receiving, from a user, an indication of raw geospatial data sets corresponding to an area of interest, identifying based on the retrieved metadata;
identifying, from business logic rules, a plurality of operations operable on the raw geospatial data sets, the business logic rules indicative of parameters corresponding to each of the operations;
determining, by correlating the parameters of the operations to the attributes of the indicated data sets, operations applicable to the indicated raw geospatial data sets;
receiving, from the user, an operation selection indicative of a subset of selected operations from the identified plurality of operations;
applying the selected operations to the indicated raw geospatial data sets by providing the attributes of each of the raw geospatial data sets to the parameters of the selected operations; and
generating a desired output image data set corresponding to the indicated raw geospatial data sets and the selected operations.

The invention also provides a computing device for provisioning geospatial data comprising:
means for identifying a plurality of geospatial data sets corresponding to an area of interest, each of the geospatial data sets having metadata and attribute values defining attributes of the area of interest;
means for determining, from transformation rules, operations applicable to the identified geospatial data sets based on the attributes of the geospatial data sets and the parameters corresponding to the operations;
means for applying at least one of the determined operations to the identified geospatial data sets according to the transformation rules to generate an output data set; and
means for providing, to a user, a provisioned data set corresponding to the area of interest from the generated output data set.

### BRIEF DESCRIPTION OF THE DRAWINGS

The foregoing and other objects, features and advantages of the invention will be apparent from the following more particular description of preferred embodiments of the invention, as illustrated in the accompanying drawings in which like reference characters refer to the same parts throughout the different views. The drawings are not necessarily to scale, with emphasis instead being placed upon illustrating the embodiments, principles and concepts of the invention.
Fig. 1A is a context diagram of geospatial data users, assets, and operations managed, stored, and processed by the configurations discussed herein.
Fig. 1B is a further context diagram of an exemplary geospatial data environment suitable for use with configurations of the invention;
Fig. 2 is an exemplary flowchart of geospatial data provisioning in the environment of Fig. 1;
Fig. 3 is a data flow diagram of a geospatial data provisioning application in the geospatial data provisioning server of Fig. 1 and operable for provisioning geospatial data as in Fig. 2;
Fig. 4 is a block diagram of the geospatial data provisioning application of Figs. 1 and 3 in greater detail;
Figs 5-8 are a flowchart of geospatial data provisioning as in Fig. 4;
Fig. 9 shows an exemplary graphical user interface operable for identifying geospatial data sets in the application of Fig. 4;
Fig. 10 shows zooming on a particular area of the area in Fig. 9including a plurality of geospatial data sets applicable to the zoomed area;

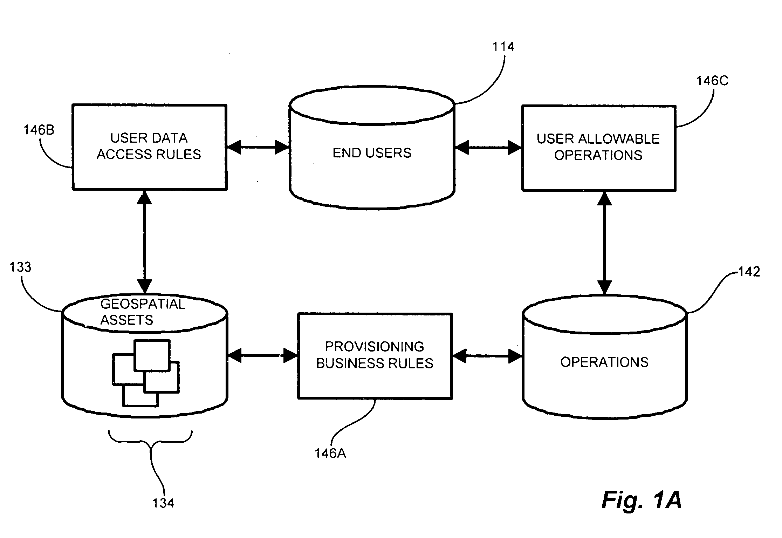

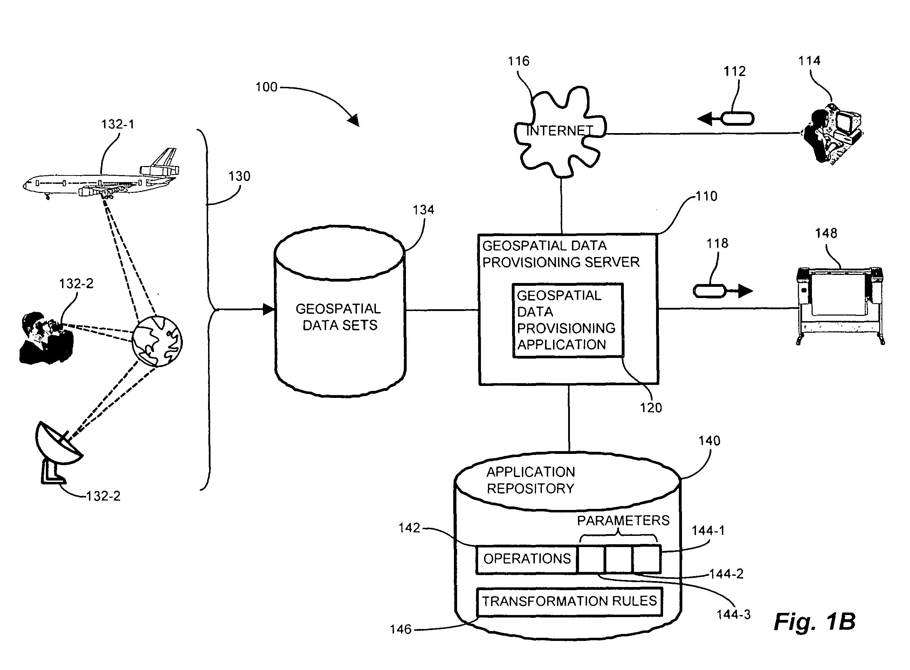

Fig. 1 shows selection of applicable operations based on the selected geospatial data sets and the transformation rules;

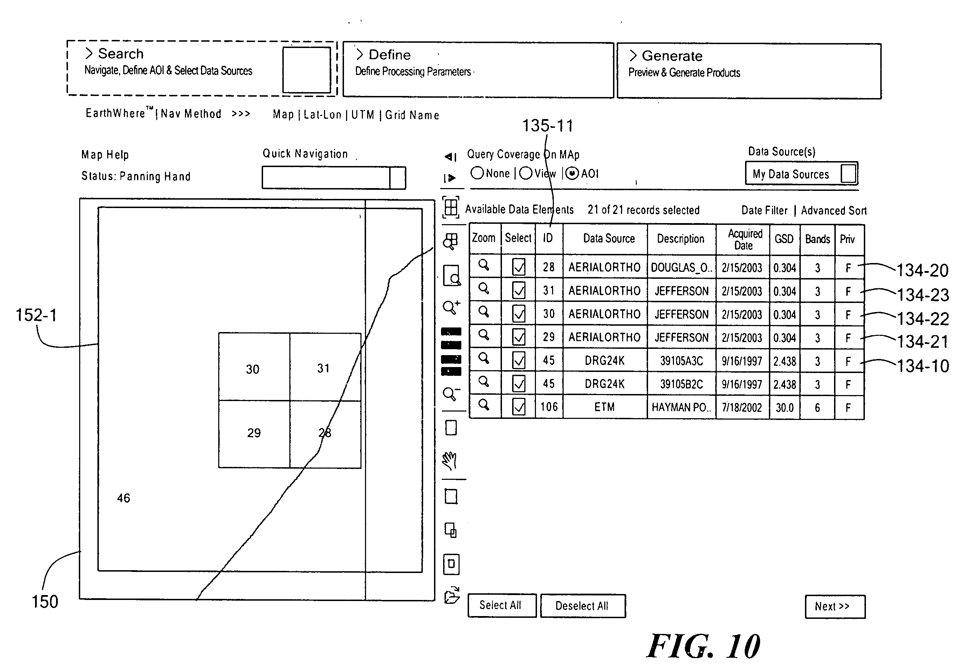

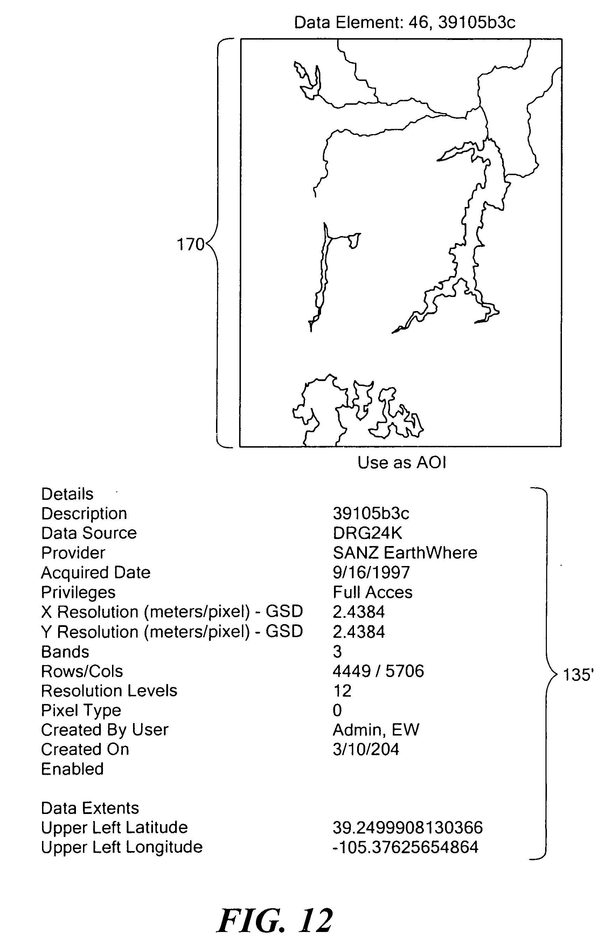

Fig. 12 shows a thumbnail of the area corresponding to a particular geospatial data set in the area of Fig. 10;

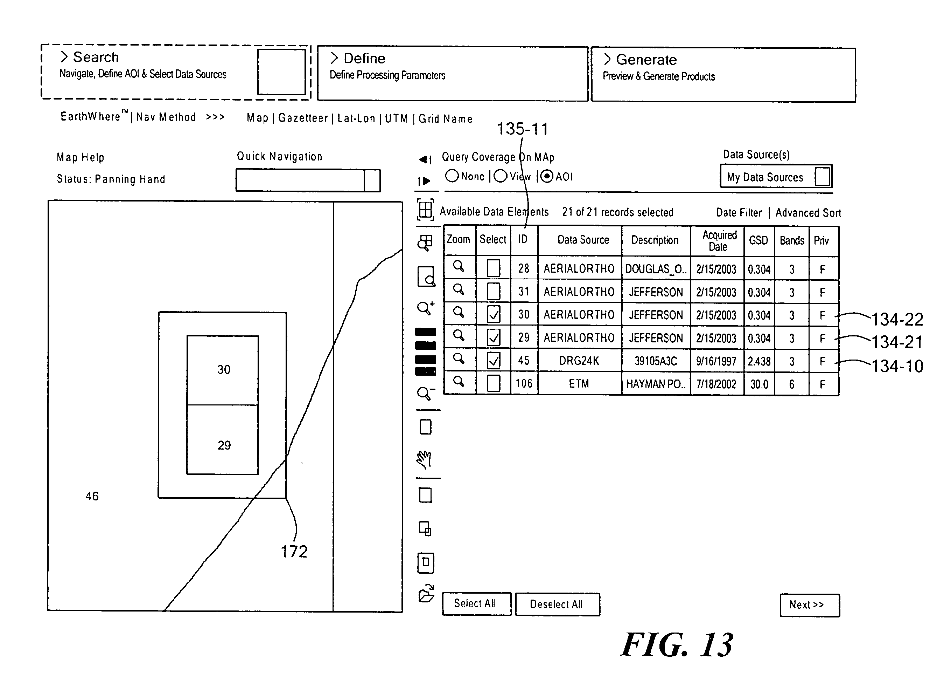

Fig. 13 shows selecting an area of interest from Fig. 10;

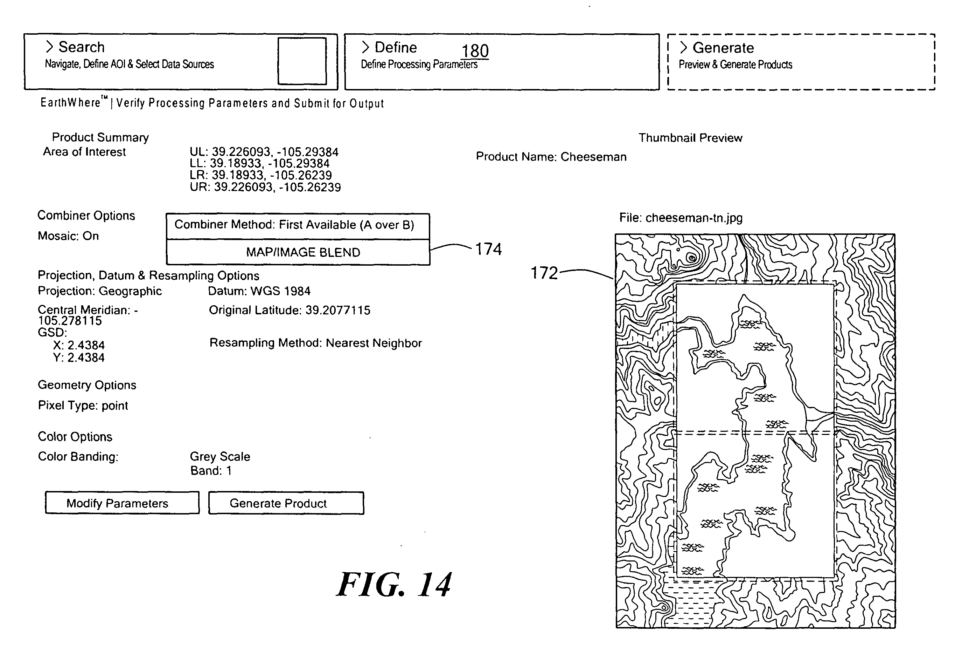

Fig. 14 shows a thumbnail preview and operation selection on the area of interest in Fig. 13; and
Fig. 1 shows the provisioned geospatial output map of the area of interest in Fig. 13.

### DETAILED DESCRIPTION

Configurations discussed further below provision geospatial data in such a manner that users may search for existing available geospatial data sets concerning an area of interest, define available geospatial operations for the geospatial data sets by selecting in a point-and-click manner, and generate the resulting geospatial output data sets by applying the selected geospatial operations to the data sets. The interactive geospatial data provisioning application provides a graphical user interface operable to present a map of geographic regions and the corresponding geospatial data sets available. The user selects the area of interest by searching, panning and zooming over the mapped regions which outline and identify portions covered by the available geospatial data sets. The geospatial data provisioning application identifies geospatial data sets within the area of interest. By analyzing the attributes available in the identified geospatial data sets, the geospatial data application determines the geospatial data operations which may be performed on the data sets. A set of transformation rules (business logic rules) enumerates the attributes and conditions which correspond to particular operations, and therefore computes the operations available for a particular selection of geospatial data sets. The geospatial data application employs a GUI to present the available operations, and the user selects the geospatial data operations to apply from among the available operations. The application further employs an access control list associated with each geospatial data set to ascertain if the requesting user has sufficient access to the data sets included in the request. The geospatial data application applies the selected operations to the identified geospatial data set or sets to generate the resulting output data set as a finished product. The output data set is rendered by the application on a graphical output display, via the GUI, using an appropriate available file format or graphical display mechanism.

Fig. 1A is a context diagram of geospatial data users, assets, and operations managed, stored, and processed by the configurations discussed herein. Referring to Fig. I A, geospatial data assets typically include geospatial data sets 134, as collections of raw information concerning geospatial attributes of a particular area as is known to those of skill in the art. Accordingly, Fig. 1A describes the high level entity relationships between the three primary components discussed herein: end users 114, geospatial assets 133 and operations 142, and describes the intersecting business rule logic therein. The concept of the exemplary configuration discussed herein relies on these three virtual objects 114, 133 and 142 and their relationships within an overall process. These objects include a user or person who will create the desired data, geospatial assets which include the acquired data and operations which are the algorithms which can be used to produce data products. End users, or simply users 114 employ and manage the geospatial data sets 134 according to the user access data rules 146B, employing the operations 142 as permitted by the user allowable operations rules 146C, which apply the operations 142 to the geospatial data sets 134 according to the provisioning business rules 146A. The methods implemented by the rules 146A, 146B and 146C collectively form a set of transformation rules 146, discussed in further detail below.

Fig. 1B is a further context diagram of an exemplary geospatial data environment 100 suitable for use with configurations of the invention. Referring to Fig. 1, the environment 100 includes a geospatial data provisioning server 110 including a geospatial data provisioning application 120. The data provisioning server 110 is in communication with a plurality of geospatial data sets 134, stored by a variety of suitable means discussed further below. A geospatial data infrastructure 130 is operable to capture and store geospatial data from any suitable source, including aerial sensory reconnaissance 132-1, ground surveying and tracking 132-2, satellite imagery techniques 132-3, and other mechanisms for storage as the geospatial data sets 134. The geospatial data sets 134, therefore, are raw, sensory based geospatial data gathered from the infrastructure 130 for processing by the geospatial data provisioning application 120 (application). Alternatively, there are cases whereas the geospatial datasets 134, may be processed into a more usable format by automated techniques employed by third parties. These processes geospatial datasets also reside in 134.

An application repository 140 includes predetermined operations 142 operable for processing and transforming the geospatial data sets 134 according to transformation rules 146 indicative of the types of geospatial data sets 134 and applicable operations 142, also discussed further below. Each of the operations 142 may have one or more parameters 144-1..144-N corresponding to attribute data in the geospatial data sets 134 and the associated transformation rules and adapted for population therefrom. The geospatial data provisioning application 120 is operable to employ the operations 142 in response to a data provisioning request 112 from a user 114, received via a public access network such as the Internet 116, to generate a responsive geospatial output data set 118, or image, to an output medium such as a data storage device, graphical display device 148 (i.e. printer, graphic screen, plotter, etc.). Typically, such a geospatial output data set 118 is an output image displayable in a graphical form such as a map, however is operable to be an alternate form of synthesized results from transformations applied to raw or pre-processed geospatial data sets 134.

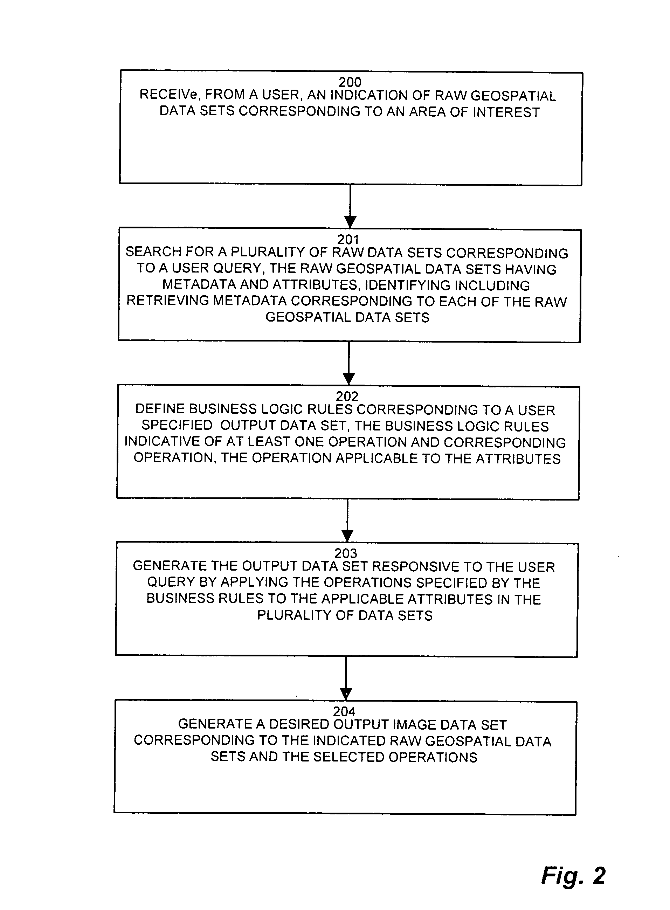

Fig. 2 is an exemplary flowchart of geospatial data provisioning in the environment of Fig. 1. Referring to Figs. 1 and 2, the method of provisioning geospatial data includes receiving, from a user, an indication of source (lets use the term source to include either raw or pre-processed) geospatial data sets corresponding to an area of interest, as depicted in step 200. As indicated above, the user employs the GUI for selecting an area of interest from a geographical display, or map, typically in the form of a user query 112. Alternatively, the query may be initiated by a third party application which generates a query and communicates with the geospatial data provisioning server in a programmatic method. The area of interest includes one or more previously collected geospatial data sets 134. Accordingly, the data provisioning application 120 searches for a plurality of source geospatial data sets 134 corresponding to the user query 112, as shown at step 201.

In the exemplary configuration discussed further below, the searching occurs after a discovery, or ingestion, phase in which the application 120 catalogs available geospatial data sets prior to and in anticipation of the user query 112. The cataloged data, discussed further below, provides support for provisioning the geospatial data to produce the user specific output data set 118, or image, in advance of actual retrieval of the entire group of geospatial data sets 134 employed by the query 112. The geospatial data sets 134 include various forms and types of geospatial data gathered and stored within the geospatial infrastructure 130. Typically, the source geospatial data sets 134 have metadata and attributes, in which identifying includes retrieving metadata corresponding to each of the source geospatial data sets 134 implicated by the user query 112. Note that the raw data refers to the sensory based input from the various contributing sensors and gathering mechanisms 132-1..132-3. The geospatial data undergoes several levels of processing to generate the output data set 118, or product. The raw, or level 0 data is orthorectified into level 1 data. Orthorectification refers to orientation of the data to a corresponding earth based reference to which it refers, such as the latitude and longitudinal bounds of the area represented. Multiple orthorectified data sets (level 1) may be transformed one or more times to generate the output data set 118, or level 2 data.

The application 120 is responsive to the transformation rules 146, or business logic rules, which identify applicable operations 142 for applying to user-selected geospatial data sets 134. Accordingly, the application 120 identifies or defines the transformation rules 146 corresponding to a user specified output data set 118 from the query 112. The transformation rules 146 are indicative of at least one operation 142 and corresponding parameters 144, in which the operation or operations 142 are applicable to the attributes of the particular geospatial data sets 134, as depicted at step 202. The geospatial data provisioning application 120 then generates the output data set 118 responsive to the user query 112 by applying the operations 142 specified by the transformation rules (e.g. business logic rules) 146 to the applicable attributes in the plurality of data sets 134, as disclosed at step 203. Using the transformed data sets, the application 120 generates the desired output data set 118 corresponding to the indicated source geospatial data sets 134 and the selected operations 142, typically a graphical output file such as a jpeg, tif, or other output format as is known in the art, as depicted at step 204, suitable for use within an end users application for display on a graphical output device such as a screen or plotter 148.

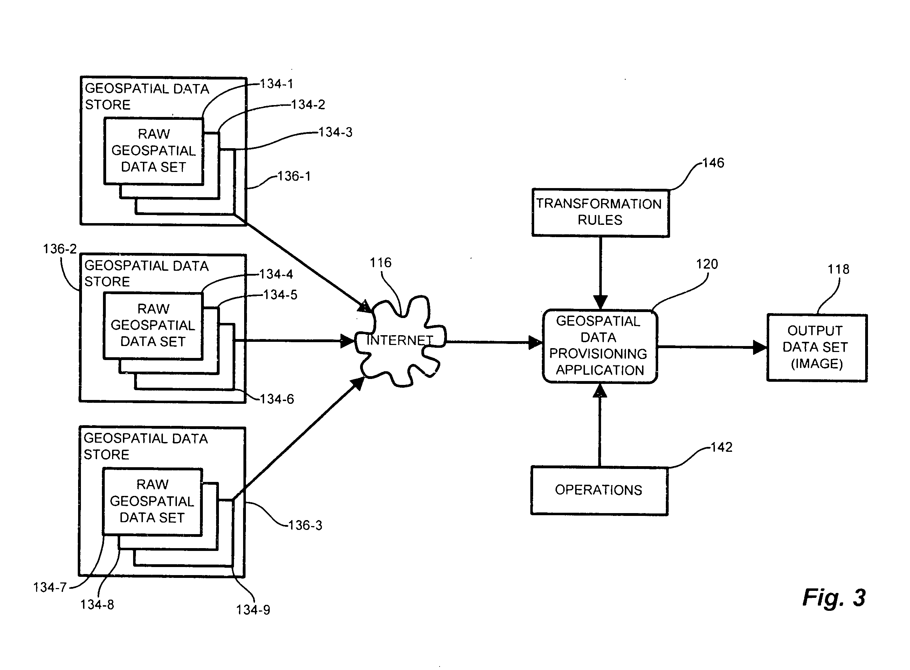

Fig. 3 is a data flow diagram of the geospatial data provisioning application 120 in the geospatial data provisioning server 110 of Fig. 1 and operable for provisioning geospatial data as in Fig. 2. Referring to Figs. 1 and 3, the geospatial data infrastructure 130 assembles and organizes geospatial data in large databases operating as geospatial data stores 136-1..136-3 (136 generally), or data sources. As indicated above, such geospatial data stores 136 are generally aligned with geographic and qualitative criteria. Due to the quantity and size of the geospatial data sets 134, network logistics associated with transporting the geospatial data sets are a substantial aspect of geospatial data provisioning. Each geospatial data store 136 stores a plurality of geospatial data sets 134-1..134-N operable for selective retrieval by the geospatial data provisioning application 120 via the Internet 116. The geospatial data provisioning application 120 employs the transformation rules 146 to determine the operations 142 applicable to (i.e. operable on) a particular subset of raw geospatial data sets 134-N retrieved from the stores 136. As will be described in further detail below, the geospatial data sets 134 include attributes, or fields, concerning the geographic area to which the geospatial data pertains. The geospatial data sets 134 store attribute values employed by the operations. The applicable operations 142 are therefore the operations for which a particular data set or combinations of data sets 134 that can be used to create a custom derivative data set.

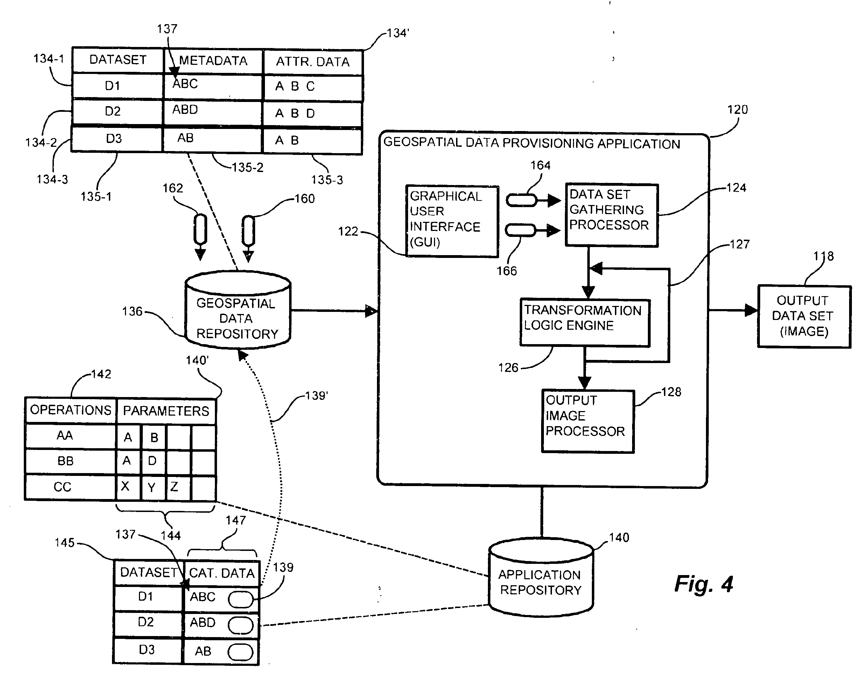

Fig. 4 is a block diagram of the geospatial data provisioning application 120 of Figs. 1 and 3 in greater detail. Referring to Figs. 1, 3 and 4, the geospatial data provisioning application 120 includes a graphical user interface (GUI) 122 or programmable interface (i.e. software API or toolkit), operable to receive and display information on behalf of the user 114, a data set gathering processor 124, a transformation logic engine 126, and an output image processor 128. The source geospatial data stores 136-N, abbreviated simply as representative geospatial data repository 136, includes the collective geospatial data sets 134-N. The raw datasets 134 are shown in an exemplary manner in table 134', which includes, for each dataset 134, a dataset ID, or name 135-1, metadata 135-2, and attribute values 135-3. The application repository 140 is also illustrated as an exemplary table 140', and enumerates operations 142 and parameters 144.

Illustrating the principles of applicable operations 142, the geospatial dataset table 134' includes exemplary datasets D1, D2 and D3. Each dataset 134 has metadata 135-2. which typically includes the attributes names 137 and locations of the source data and the thumbnail data 139 (not necessarily stored in the database, but in the geospatial data repository 136), and may include other information. The data corresponding to the attributes 135-2 is stored as attribute values 135-3. The relationship between the operations and data are such that the user will define a business rule for a combination of data source types (i.e. map and image). Exemplary operations AA, BB and CC are shown in table 140', along with expected parameters 144. Therefore, operation AA is applicable to datasets D1, D2 and D3 because each has the expected parameters A and B. Operation BB is applicable only to dataset D2, having expected parameters A and D, and operation CC is not applicable to any of D1, D2 or D3, lacking the requisite parameters X, Y and Z. Note that this example is illustrative, and more complex relations may typically exist between datasets 134 and operations 142, and are expressible in the transformation rules 146. For example, certain geospatial operations 142 may be binary, expecting two or more data sets, or unary, and operable on only a single data set. Typical geospatial operations include transformations, projections, resampling, combinations, fusing and may include others, as are known to those of skill in the art.

The geospatial data provisioning application 120 also employs a catalog corresponding to provisioned geospatial data. The catalog is shown as table 145, storing catalog data 147 and reference to thumbnail images 139, which may be stored in the geospatial data repository 136 and referenced from the catalog data 147, as shown by dotted arrow 139', and attribute names 137. The data set gathering processor 124 generates the catalog data 147 as new geospatial data sets 134 are discovered, and stores the catalog data 147 in the application repository 140. Alternatively, the catalog data may be included in the geospatial data repository 136 as an ingested, or discovered data set 134. The cataloged data 145 provides data operable for computing applicable operations and for displaying the low resolution thumbnail without requiring transport of the full geospatial data set 134 such as the attribute data 135-4, until a user selection 112 requests the full data set 134. In the exemplary arrangement, the cataloged data includes the available attributes 137 (i.e. names), references to the thumbnail data 139, the geographic location of the data asset i.e. the geographic region which the data set 134 defines, and a pointer to the actual raw data set.

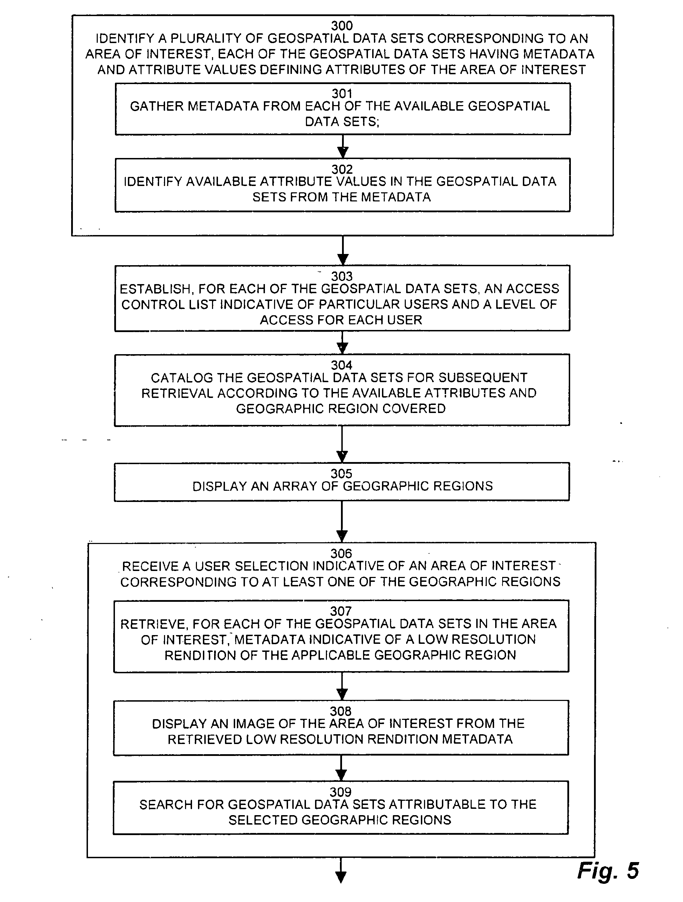

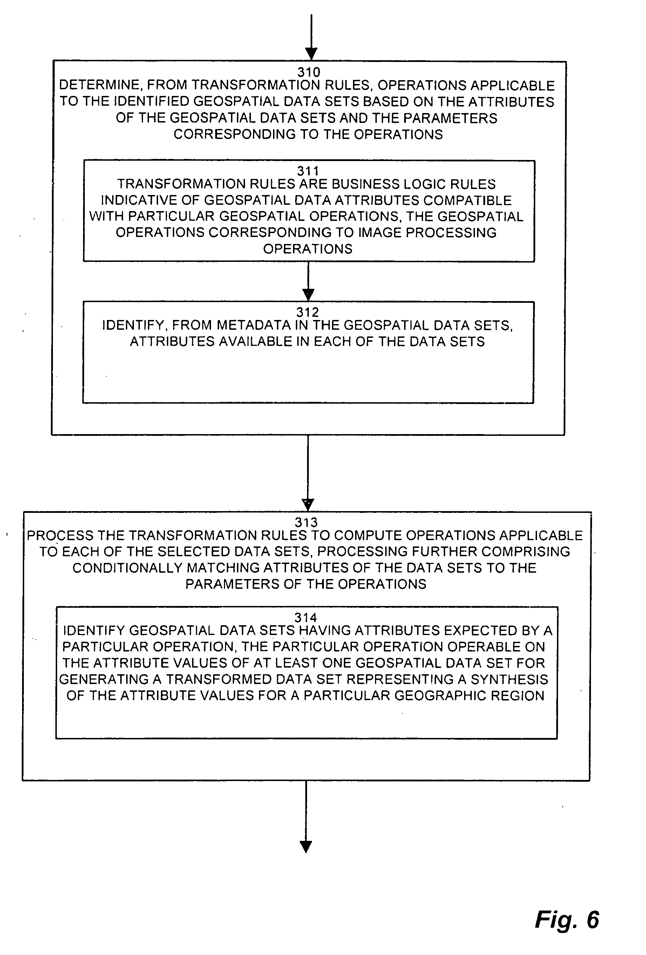

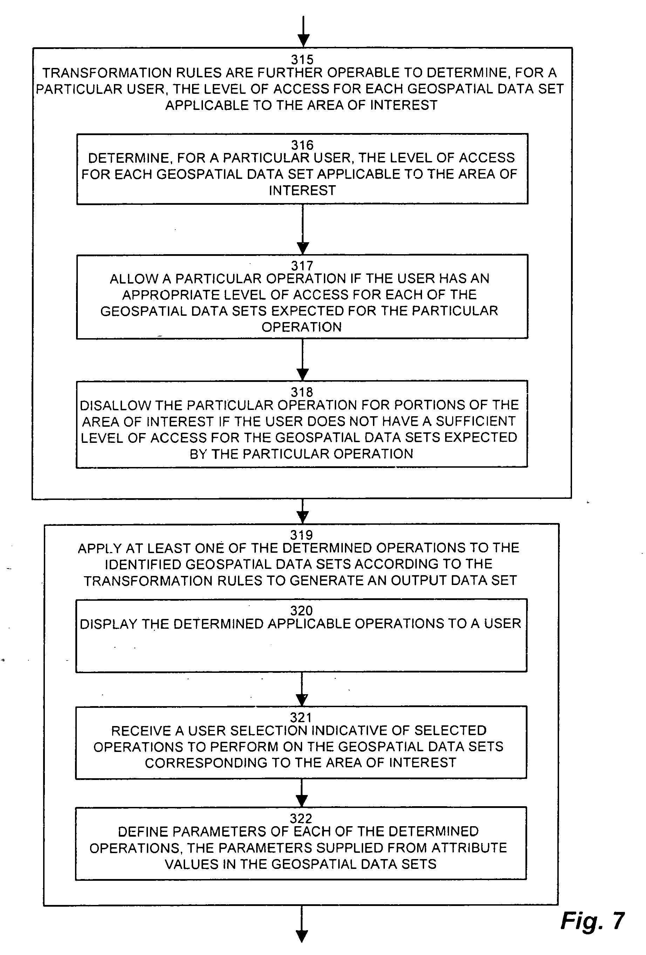

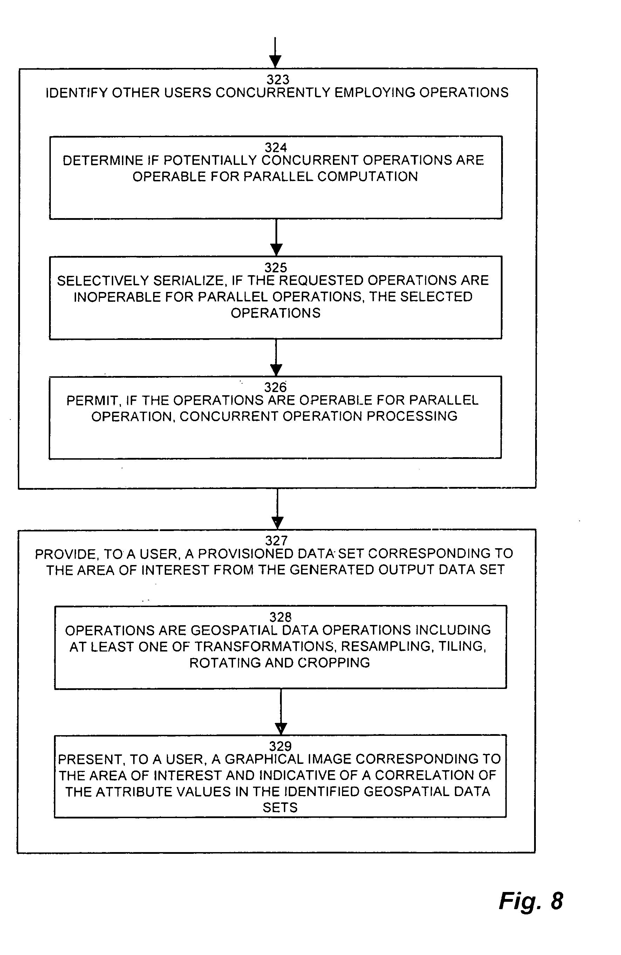

Figs 5-8 are a flowchart of geospatial data provisioning as in Fig. 4. Referring to Figs. 4-8, the steps of an exemplary geospatial data provisioning scenario in response to a user request 112 are disclosed. The geospatial data provisioning application 120 identifies a plurality of geospatial data sets 134 corresponding to an area of interest (described further below), in which each of the geospatial data sets 134 has metadata 135-2 and attribute values 135-3 defining attributes of the area of interest, as depicted at step 200. The application 120 gathers metadata 135-2 from each of the available geospatial data sets 134, as shown at step 301. The application 120 identifies available attribute values 135-3 in the geospatial data sets 134 from the metadata 135-2, as depicted at step 302. The identified attributes allow the application to identify applicable operations 146, discussed further below. The retrieved metadata 135-2 also includes thumbnail information about the geographic area covered in the data set for displaying a low-resolution preview, or thumbnail, of the area.

The application 120 establishes, for each of the geospatial data sets 134, an access control list indicative of particular users 114 and a level of access for each user 114, as disclosed at step 303. The access control lists indicate, for each user 114, a type of access afforded that user 114 and available operations 142 invokable by that user. Certain geospatial operations 142 may trigger substantial deployment of computational resources and/or may generate a security sensitive result, and accordingly, enumerating and controlling individual user 114 access to such operations is desirable. For example, a particularly computationally intensive operation may burden the application 120 to the exclusion of other tasks for a substantial period. Accordingly, access to such operations may be limited to those having supervisory authority to apportion such resources. In the exemplary configuration, access levels include full access, view access, and no access. Alternative arrangements may apply additional or other tiers of access. Depending on the access level, a user 114 may have access to only the metadata, for example, which may effectively disable some operations from applicability to the data set on behalf of the user 114. Access control is useful for managing license rights and subscriptions to the geospatial data sets, for example, which may then be apportioned on a contractual, fee-for-services, or other selective access criteria.

Based on the retrieved metadata 160, the geospatial data provisioning application 120 catalogs the geospatial data sets 134 for subsequent retrieval according to the available attributes and geographic region covered, as depicted at step 304. The cataloged metadata 160 is employed for indexing and referencing the geographic area responsive to interactive user browsing, typically pending a query request, and includes thumbnail and attribute field information. The cataloged data may then be employed to identify applicable geographic regions and operations, and display the potential operations to users 114, without requiring transport of the full data set 134. As such geospatial data sets 134 are typically very large and consume substantial network resources for transport, the cataloged information allows interactive browsing of data sets 134 applicable to a geographic area of interest and thumbnail observation prior to encumbering the system with the entire data set 134, discussed further below with respect to the GUI 122.

The provisioning application 120 typically performs the cataloging and access control discussed above as discovery or ingestion steps prior to an interactive user session resulting in a user query 112. The resulting cataloged geospatial data sets 134 are then traversed in real time by the user 114 for preparing a query 112, using the cataloged data 147 , thus relieving the user from manually searching and identifying remote data sets 134. In the exemplary configuration, the data set gathering processor 124 identifies available data sets 134 during a discovery phase before receiving the user query 112. Such a discovery phase serves to maintain the catalog 145 populated with current dataset 134 availability information, and therefore facilitates the provisioning process by enumerating the location and type of data available for user queries 112. As will be discussed further below, the catalog 145 therefore serves as input to the transformation rules 146 for determining the available operations 142 to a particular user for the selected data sets. It should be noted that the physical location of the cataloged data 145 from the actual geospatial data sets 134 may or may riot be substantial, however in either case the data set gathering processor 124 employs the catalog 145 for quickly applying the transformation rules 146 and identifying available data sets 134 and operations for a particular user 114, therefore enabling a user specific output data set 118 from the geospatial data provisioning application 120.

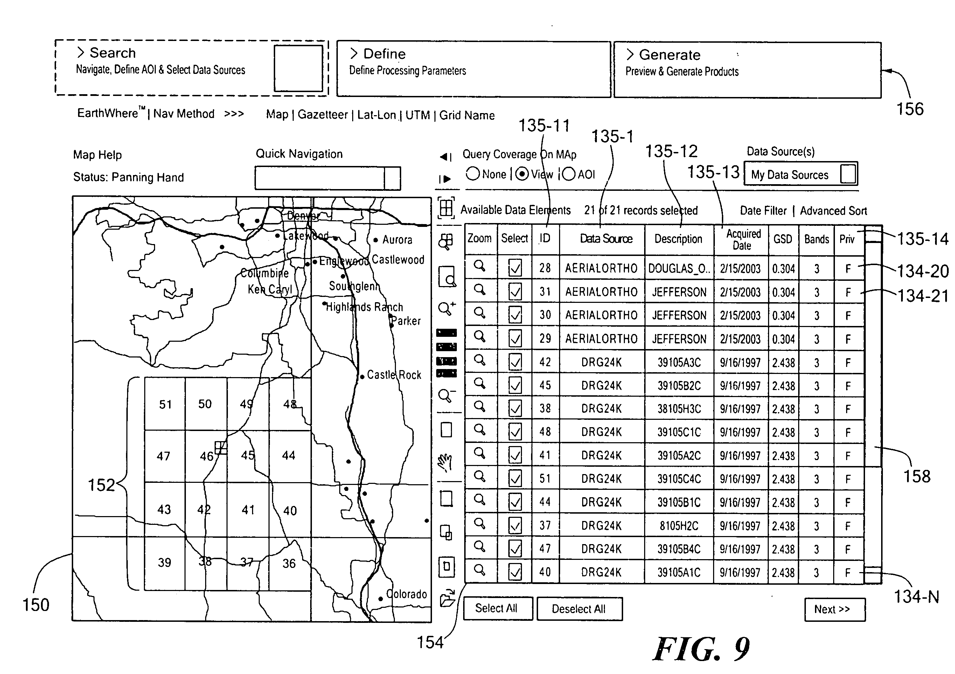

Following the initial provisioning, or discovery, steps discussed above, identifying the plurality of geospatial data sets 134 employed by the user query 112 involves displaying an list of geospatial data sets which correspond the user selected area of interest as depicted at step 305. The GUI 122 displays a map of a user selected area as an interactive zooming and panning sequence. The map also displays geospatial data sets 134 covering particular areas by outlining and identifying the areas. The GUI 122 provides a draggable selection box manipulatable by the user 114, and receives a user selection 164 indicative of an area of interest corresponding to at least one of the geographic regions, as shown at step 306. Alternatively, the user can select an area of interest using other methods including entering the longitude and latitude of the area of interest. The system then queries the database and returns a list of corresponding geospatial data sets 134 within the selected area, and retrieves, for each of the geospatial data sets 134 in the area of interest, metadata 135 indicative of a low resolution rendition of the applicable geographic region 139, as depicted at step 307 and associated attributes of the data sets. The GUI 122 then displays an image of the area of interest from the retrieved low resolution rendition metadata 139, as disclosed at step 308, and searches for geospatial data sets 134 attributable to the selected geographic regions, as depicted at step 309. The GUI 122, therefore, presents a point-and-click interface allowing a user to visually view a geographic area and outlined geospatial data sets within the viewed area. The user 114 then selects the area of interest by dragging a rectangular selection box or other means, and the GUI 122 invokes the data set gathering processor 124 to gather the geospatial data sets 134 within the selected area of interest, discussed further below in the exemplary screens of Figs. 9-14.

After the data set gathering processor 124 identifies the applicable data sets 134, the transformation logic engine 126 determines, from transformation rules 146, operations 142 applicable to the identified geospatial data sets 134 based on the attributes 135-3 of the geospatial data sets 134 and the parameters 144 corresponding to the operations 142, as shown at step 310. In the exemplary configuration, as indicated above, the transformation rules 146 are business logic rules indicative of geospatial data attributes 137 compatible with particular geospatial operations 142, in which the geospatial operations correspond to geospatial transformations such as image processing operations, as disclosed at step 311. The transformation logic engine 126 determines the applicable operations by identifying, from metadata in the geospatial data sets 134, attributes 137 available in each of the data sets, as shown at step 312.

The transformation logic engine 126 processes the transformation rules 146 to compute the operations 142 applicable to each of the selected data sets 134, in which processing further includes conditionally matching attributes 135-3 of the data sets 134 to the parameters 144 of the operations 142, as depicted at step 313 and discussed above with respect to Fig. 4. In further detail, conditionally matching the operations 142 to the data sets 134 involves identifying geospatial data sets 134 having attributes 135-3 expected by a particular operation 142, in which the particular operation 142 is operable on the attribute values 135-3 of at least one of the selected geospatial data sets 134 for generating a transformed data set representing a synthesis of the attribute values for a particular geographic region, as described at step 314. Application of the operations 142 may involve successive iterations by the transformation logic engine 126, shown by arrow 127, as resampling, and other transformations are applied to the geospatial data sets 134.

In the exemplary configuration, the transformation rules 146 are further operable to determine, for a particular user 114, the level of access for each geospatial data set applicable to the area of interest, as depicted at step 315 and discussed further below in the screen examples of Figs. 9-14. The level of access determined above in step 303 determines operations applicable on behalf of that user 114. Accordingly, the data provisioning application 120 determines, for a particular user 114, the level of access for each geospatial data set 134 applicable to the area of interest, as shown at step 316 by retrieving the previously established access level. Based on the available operations 142 for the selected data sets 134 within the area of interest, the application 120 allows a particular operation if the user 114 has an appropriate level of access for each of the geospatial data sets 134 expected for the particular operation 142, as depicted at step 317. Conversely, the application 120 disallows a particular operation 142 for portions of the area of interest if the user 114 does not have a sufficient level of access for the geospatial data sets 134 expected by the particular operation 142, as shown at step 318. In the exemplary configuration, the available data sets 134 are listed in a selection list along with the access level, illustrated further below. Attempts to select an operation on a data set 134 for which the user 114 has insufficient access results in either the operation proceeding without the attribute data from the inaccessible data set or may cause the operation to fail entirely, depending on the type of data set 134 and the attempted operation 142.

Following the user selection of data sets 134 and the access control list check, the transformation logic engine 126 applies one or more of the determined operations 142 to the identified geospatial data sets 134 according to the transformation rules to generate an output data set, as shown at step 319. Note that the user 114 may select only a subset of the available operations 142 performable on the data sets 134 applicable to the area of interest. Accordingly, applying the operations 142 further includes displaying the determined applicable operations 142 to a user via the GUI 122, as shown at step 320, and receiving a point-and-click user selection 166 indicative of selected operations 142 to perform on the geospatial data sets 134 corresponding to the area of interest, as depicted at step 321. The transformation logic engine 126 then defines the parameters of each of the determined operations 142 from the attribute values 135-3 in the geospatial data sets 134, as depicted at step 322.

In the exemplary configuration, the geospatial data provisioning application 120 identifies other users concurrently employing operations, as depicted at step 323, for monitoring and controlling concurrent access to geospatial data sets 134 and for concurrent processing. The transformation logic engine 126 determines if potentially concurrent operations are operable for parallel computation, as shown at step 324, and selectively serializes, if the requested operations are inoperable for parallel operations, the selected operations, as depicted at step 325. Due to the size and processing complexity of the geospatial data operations 142, parallelism and caching of the operations 142 and data sets 134 is desirable, but may not be appropriate in all circumstances. Accordingly, the transformation logic engine 126 permits, if the operations are operable for parallel operation, concurrent operation processing, as shown at step 326.

Following processing of the operations 142 on the selected geospatial data sets 134, the data provisioning application 120 provides, to the requesting user 114, a provisioned data set corresponding to the area of interest from the generated output data set 118, as shown at step 327. The completed operations 142 performed by the transformation logic engine 126 are geospatial data operations including one or more of transformations, resampling, tiling, rotating and cropping, and may include other suitable operations as available in the application repository 140, as shown at step 328. Following geospatial processing by the transformation logic engine 126, providing the provisioned data set further includes presenting, to a user, a graphical image corresponding to the area of interest and indicative of a correlation of the attribute values in the identified geospatial data sets, as depicted at step 329. Accordingly, the output image processor 128 receives the results of the operations 142 from the transformation logic engine 126, and generates the output data set typically in the form of a graphical image suitable for visual display on a monitor, plotter, or other hardcopy or display device 148.

Fig. 9 shows an exemplary graphical user interface operable for identifying geospatial data sets in the application of Fig. 4. Referring to Figs. 4 and 9, a geographic area 150 displays geographic portions 152 corresponding to geospatial data sets 134-1..134-N, indexed by ID 135-11. Each of the geospatial data sets 134 is listed in a display window 154, showing the available geospatial data sets 134 in the geographic area 150 in a scroll down format in the display window 154. For each of the data sets 134, available fields are shown, including the ID 135-11, dataset source 135-1, a description 13S-12, a data acquired 135-13, and an access privilege level 135-14. A variety of other fields (135 generally) may be included. A progression indication 156 indicates which step in the provisioning process is being undertaken. In the search step, the user 114 selects the particular geographic area 150 by panning, zooming, and searching using the GUI 122, and enumerates geospatial data sets 134 of interest, indexed by ID 135-11.

Fig. 10 shows zooming on a particular portion of the area in Fig. 9 including a plurality of geospatial data sets 134 applicable to the zoomed area. Referring to Figs. 9 and 10, the user zooms to the geographic portion 152-1 corresponding to geospatial data set ID 46. This area 46 includes geographic portion 152-1 corresponding to data set 134-10, and includes areas 28-31, corresponding to data sets 134-20..134-23.

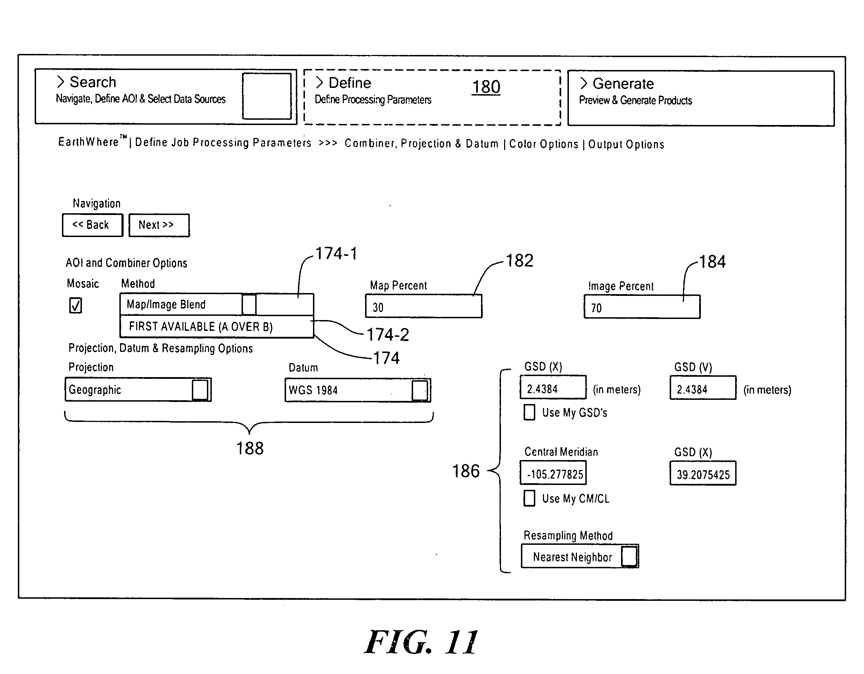

Fig. I 1 shows selection of applicable operations based on the selected geospatial data sets and the transformation rules. Referring to Fig. 11, a pulldown window or other GUI selection mechanism allows selection of the available operations resulting from application of the transformation rules to the user selected data sets within the selected area 152-1. The transformation rules 146 define, for the available data sets 134, or elements, which operations may be performed. For example, a particular transformation rule 146 may take the form of: 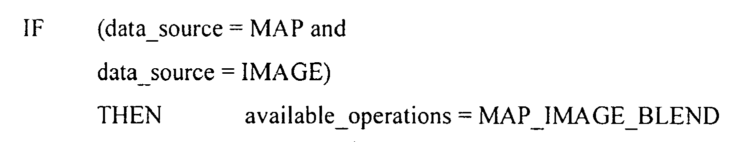 meaning that if there are data sets 134 addressing a geographic area in which one of the types of the data sets is a MAP and another data set is of type IMAGE, then an operation of MAP_IMAGE_BLEND is selectable for these data sets 134. Of course, the user concerned also requires full access privileges for the data sets as well as access to the MAP _IMAGE_BLEND operation. Application of this transformation rule is further applicable in the discussion that follows below.

The define screen 180 displays the available operations in the pulldown 174, based on application of the transformation rules 146. In the exemplary configuration, the available operations are Map/Image Blend 174-1 and First Available (A over B) 174-2, of which Map/Image Blend 174-1 is selected. Operation specific parameters Map Percent 182 and Image Percent 184 appear to further refine input specific to the selected operation. In this example, the user select the proportion of contribution from the map and image sources respectively, to appear in the final output data set 118 image product. Other fields include the global geographic orientation parameters 186. which define the area of interest as specific global coordinates, and the combiner and transformation options 188 which specify and refine various image processing and resampling combinations potentially applicable to the output data set 118.

Fig. 12 shows a thumbnail of the area corresponding to a particular geospatial data set in the area of Fig. 10. A thumbnail image 170 corresponding to a particular data set 134, such as the exemplary region 46, may be selected and reproduced from the metadata 139. Alternatively, a user 114 may select an area of interest from the displayed geographic area 150, such as region 46 of Fig. 10, shown in the thumbnail as data element 46. The GUI displays a thumbnail 170, or preview, along with metadata 135' concerning the geospatial dataset 134-10 derived from the area 46. Alternatively, the area of interest is selectable from an arbitrary display region overlying several datasets 134. Fig. 13 shows selecting an area of interest from Fig. 10. Referring to Figs 9, 10, 11 and 12, the area of interest 172 is user selectable via the GUI 122 in a point and click manner, by dragging a selection rectangle or other suitable mechanism. The area of interest 172 includes regions 30, 29, and 46, defined respectively by data sets 134-22, 134-21 and 134-10, respectively. Further, it should be noted that the display window 154 is operable to display all regions in the geographic region 150 window, and employs scroll bars 158,- typical of such graphical user interfaces, to address an appropriate list of data sets 134 depending on the zoom scale. Note that the area of interest is selectable not only by a two point defined rectangular area, but may also be selected by other methods, such as latitude and longitude coordinates, point and distance (i.e. radius), irregular polygonal shapes, or other suitable method. The application 120 includes the geospatial data sets within the area so specified as corresponding to the selected area of interest.

Fig. 14 shows a thumbnail preview and operation selection on the area of interest in Fig. 13. Referring to Figs. 13 and 14, upon selection of the area of interest 172, the data set gathering processor 124 identifies the geospatial data sets 134 within (i.e. corresponding to a region within the geographic area of interest), matches the metadata with the available operations 142, as described above, and determines which operations 142 a user 114 may select for application to the geospatial data sets. As indicated above, in the exemplary configuration, the available operations 142 are First Available 174-2, meaning image data of one image is overlaid on another, and Map Image/Blend 174-1. A plurality of operations 142 selectable by the user in this manner may be envisioned.

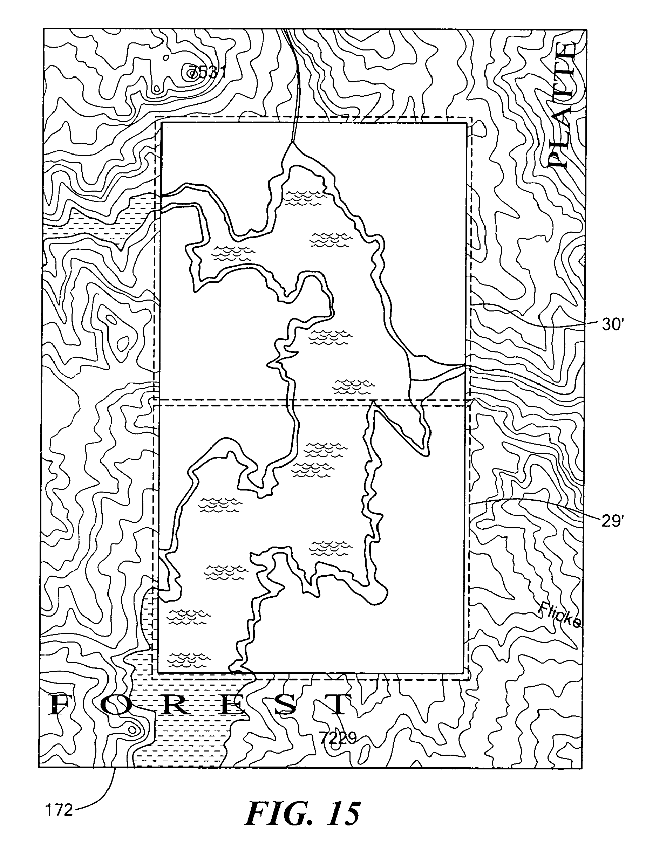

Fig. 15 shows the provisioned geospatial output map of the area of interest in Figs. 13 and 14. Referring to Fig. 15, the area of interest 172 is shown as the provisioned product, and the regions 30 and 29 overlaid on region 46, as indicated by the dotted lines 30' and 29.' In this manner, the geospatial data provisioning application provisions a finished product as a geospatial output data set, typically an output image, representing a sequence of data set selections, operations, and associated file manipulations associated therewith previously performed as a manual sequence.

The geospatial data provisioning framework and mechanism disclosed herein may encompass a variety of alternate deployment environments. In a particular configuration, as indicated above, the exemplary geospatial data provisioning application discussed may be the EarthWhere^{™} application, marketed commercially by SANZ Inc. of Englewood, CO, assignee of the present application.

Those skilled in the art should readily appreciate that the programs and methods for geospatial data provisioning as defined herein are deliverable to a processing device in many forms, including but not limited to a) information permanently stored on non-writeable storage media such as ROM devices, b) information alterably stored on writeable storage media such as floppy disks, magnetic tapes, CDs, RAM devices, and other magnetic and optical media, or c) information conveyed to a computer through communication media, for example using baseband signaling or broadband signaling techniques, as in an electronic network such as the Internet or telephone modem lines. The operations and methods may be implemented in a software executable object or as a set of instructions embedded in a carrier wave. Alternatively, the operations and methods disclosed herein may be embodied in whole or in part using hardware components, such as Application Specific Integrated Circuits (ASICs), Field Programmable Gate Arrays (FPGAs), state machines, controllers or other hardware components or devices, or a combination of hardware, software, and firmware components.

While the system and method for geospatial data provisioning has been particularly shown and described with references to embodiments thereof, it will be understood by those skilled in the art that various changes in form and details may be made therein without departing from the scope of the invention encompassed by the appended claims. Accordingly, the present invention is not intended to be limited except by the following claims.

## Claims

1. A method of provisioning data from application of at least one geospatial operation on geospatial data comprising:
identifying a plurality of geospatial data sets corresponding to an area of interest, each of the geospatial data sets having metadata and attribute values defining attributes of the area of interest;
determining, from transformation rules, operations applicable to the identified geospatial data sets based on the attributes of the geospatial data sets and the parameters corresponding to the operations;
applying at least one of the determined operations to the identified geospatial data sets according to the transformation rules to generate an output data set; and
providing to a user, a provisioned data set corresponding to the area of interest from the generated output data set.

2. The method of claim 1 wherein applying further comprises defining parameters of each of the determined operations, the parameters supplied from attribute values in the geospatial data sets.

3. The method of claim 2 wherein identifying the plurality of geospatial data sets comprises:
displaying an array of geographic regions;
receiving a user selection indicative of an area of interest corresponding to at least one of the geographic regions; and
searching for geospatial data sets attributable to the selected geographic regions.

4. The method of claim 1 wherein determining the applicable operations further comprises:
identifying, from metadata in the geospatial data sets, attributes available in each of the data sets;
processing the transformation rules to compute operations applicable to each of the selected data sets, processing further comprising conditionally matching attributes of the data sets to the parameters of the operations.

5. The method of claim 4 wherein identifying a plurality of geospatial data sets further comprises:
gathering metadata from each of the available geospatial data sets;
identifying available attribute values in the geospatial data sets from the metadata; and
cataloging the geospatial data sets for subsequent retrieval according to the available attributes and geographic region covered.

6. The method of claim 5 wherein conditionally matching further comprises:
identifying geospatial data sets having attributes expected by a particular operation, the particular operation operable on the attribute values of at least one geospatial data set for generating a transformed data set representing a synthesis of the attribute values for a particular geographic region.

7. The method of claim 6 wherein the transformation rules are business logic rules indicative of geospatial data attributes compatible with particular geospatial operations, the geospatial operations corresponding to image processing operations.

8. The method of claim 1 wherein applying further comprises:
displaying the determined applicable operations to a user; and
receiving a user selection indicative of selected operations to perform on the geospatial data sets corresponding to the area of interest.

9. The method of claim 8 further comprising establishing, for each of the geospatial data sets, an access control list indicative of particular users and a level of access for each user.

10. The method of claim 9 wherein the transformation rules are further operable to determine, for a particular user, the level of access for each geospatial data set applicable to the area of interest.

11. The method of claim 10 wherein determining the applicable operations further comprises:
determining, for a particular user, the level of access for each geospatial data set applicable to the area of interest;
allowing a particular operation if the user has an appropriate level of access for each of the geospatiat data sets expected for the particular operation; and
disallowing the particular operation for portions of the area of interest if the user does not have a sufficient level of access for the geospatial data sets expected by the particular operation.

12. The method of claim 8 wherein receiving the user selection of operations further comprises:
retrieving, for each of the geospatial data sets in the area of interest, metadata indicative of a low resolution rendition of the applicable geographic region; and
displaying an image of the area of interest from the retrieved low resolution rendition metadata.

13. The method of claim 1 wherein the operations are geospatial data operations including at least one of transformations, resampling, tiling, rotating and cropping.

14. The method of claim 13 wherein providing the provisioned data set further comprises presenting, to a user, a graphical image corresponding to the area of interest and indicative of a correlation of the attribute values in the identified geospatial data sets.

15. The method of claim 1 wherein applying the selected operations further comprises:
identifying other users concurrently employing operations;
determining if potentially concurrent operations are operable for parallel computation;
selectively serializing, if the requested operations are inoperable for parallel operations, the selected operations; and
permitting, if the operations are operable for parallel operation, concurrent operation processing.

16. The method of claim 15 wherein retrieving geospatial data sets further comprises:
identifying a portion of the geospatial data set corresponding to the area of interest; and
retrieving only the attribute data corresponding to the area of interest.

17. The method of claim 1 further comprising:
discovering available geospatial data sets in remote data stores;
identifying attributes and image data available in the discovered data sets; and
cataloging the identified attributes and image data for successive retrieval and processing in response to a user query.

18. The method of claim 17 further comprising:
retrieving transformation rules applicable to data sets corresponding to the area of interest;
identifying the user requesting the query;
identifying, from the transformation rules, operations available to the identified user; and
determining if the particular operation requested by the query is available to the requesting user.

19. The method of claim 17 further comprising:
receiving a query request from a particular user, the query request indicative of a particular geographic area based on an area of interest;
searching the cataloged attributes and image data for datasets and operations corresponding to the area of interest; and
determining a sequence of operations applicable to the query request and operable to generate a user specific output data set from processing according to the determined sequence of operations; and
deferring retrieval of the geospatial data sets corresponding to the cataloged attributes and image data until the sequence of operations is determined.

20. A geospatial data provisioning server comprising:
a data set gathering processor operable to identify a plurality of geospatial data sets corresponding to an area of interest, each of the geospatial data sets having metadata and attribute values defining attributes of the area of interest;
a transformation logic engine operable to determine operations applicable to the identified geospatial data sets based on the attributes of the geospatial data sets and the parameters corresponding to the operations, the transformation logic engine further operable to apply at least one of the determined operations to the identified geospatial data sets according to the transformation rules to generate an output data set; and
an output image processor operable to provide, to a user, a provisioned data set corresponding to the area of interest from the generated output data set.

21. The server of claim 20 further comprising transformation rules, the transformation logic engine responsive to the transformation rules and operable to define parameters of each of the determined operations, the parameters supplied from attribute values in the geospatial data sets.

22. The server of claim 21 further comprising:
a graphical user interface (GUI) operable to displaying an array of geographic regions, the GUI further operable to receiving a user selection indicative of an area of interest corresponding to at least one of the geographic regions; and
a data set gathering processor operable to identify the plurality of geospatial data sets by searching for geospatial data sets attributable to the selected geographic regions.

23. The server of claim 20 wherein the transformation logic engine is further operable to:
identify, from metadata in the geospatial data sets, attributes available in each of the data sets; and
process the transformation rules to compute operations applicable to each of the selected data sets, processing further comprising conditionally matching attributes of the data sets to the parameters of the operations.

24. The server of claim 23 wherein the data set gathering processor is further operable to:
gather metadata from each of the available geospatial data sets;
identify available attribute values in the geospatial data sets from the metadata; and
catalog the geospatial data sets for subsequent retrieval according to the available attributes and geographic region covered.

25. The server of claim 24 wherein the transformation logic engine is further operable to identifying geospatial data sets having attributes expected by a particular operation, the particular operation operable on the attribute values of at least one geospatial data set for generating a transformed data set representing a synthesis of the attribute values for a particular geographic region.

26. The server of claim 25 wherein the transformation rules are business logic rules indicative of geospatial data attributes compatible with particular geospatial operations, the geospatial operations corresponding to image processing operations.

27. The server of claim 20 further comprising a graphical user interface (GUI), the GUI operable to:
display the determined applicable operations to a user; and
receive a user selection indicative of selected operations to perform on the geospatial data sets corresponding to the area of interest.

28. The server of claim 27 further comprising for each of the geospatial data sets, an access control list indicative of particular users and a level of access for each user.

29. The server of claim 28 wherein the transformation rules are further operable to determine, for a particular user, the level of access for each geospatial data set applicable to the area of interest.

30. The server of claim 29 wherein the transformation rules are further operable to:
determine, for a particular user, the level of access for each geospatial data set applicable to the area of interest;
allow a particular operation if the user has an appropriate level of access for each of the geospatial data sets expected for the particular operation; and
disallow the particular operation for portions of the area of interest if the user does not have a sufficient level of access for the geospatial data sets expected by the particular operation.

31. The server of claim 27 wherein the metadata corresponds to each of the geospatial data sets, the metadata indicative of a low resolution rendition of the applicable geographic region and operable to displaying an image of the area of interest from the retrieved low resolution rendition metadata.

32. A computer program product having a computer readable medium operable to store computer program logic embodied in computer program code encoded thereon for provisioning geospatial data comprising:
computer program code for identifying a plurality of geospatial data sets corresponding to an area of interest, each of the geospatial data sets having metadata and attribute values defining attributes of the area of interest;
computer program code for determining, from transformation rules, operations applicable to the identified geospatial data sets based on the attributes of the geospatial data sets and the parameters corresponding to the operations;
computer program code for applying at least one of the determined operations to the identified geospatial data sets according to the transformation rules to generate an output data set; and
computer program code for providing, to a user, a provisioned data set corresponding to the area of interest from the generated output data set.

33. A computer data signal having program code for provisioning geospatial data comprising:
program code for identifying a plurality of geospatial data sets corresponding to an area of interest, each of the geospatial data sets having metadata and attribute values defining attributes of the area of interest;
program code for determining, from transformation rules, operations applicable to the identified geospatial data sets based on the attributes of the geospatial data sets and the parameters corresponding to the operations;
program code for applying at least one of the determined operations to the identified geospatial data sets according to the transformation rules to generate an output data set; and
program code for providing, to a user, a provisioned data set corresponding to the area of interest from the generated output data set.
